# EUROPÄISCHE PATENTANMELDUNG

(11) **EP 0 654 722 A1**
(43) Veröffentlichungstag der Anmeldung: **24.05.1995**
(21) Anmeldenummer: 94117597.8
(22) Anmeldetag: 08.11.1994
(51) Int. Cl.: G05D 16/02, F16K 47/00

(54) **Gasdruckregelgerät zur Regelung des Druckes in einer Gasleitung**

(30) Priorität: 22.11.1993 DE 4339665; 22.11.1993 DE 4339691
(71) Anmelder: G. Kromschröder Aktiengesellschaft, D-49080 Osnabrück (DE)
(72) Erfinder: Standke, Gerhard, D-75334 Straubenhardt (DE); Dittrich, Herbert, D-76187 Karlsruhe (DE)

(57) **Zusammenfassung**

Das Gas-Druckregelgerät weist ein Gehäuse (1) mit einen Eingang (2), einen Ausgang (3) und ein dazwischen angeordnetes Stellorgan (4) auf. Eine Membran (9), die die Bewegung des Stellorganes (4) bewirkt oder steuert, begrenzt eine Kammer (10), welche über mindestens eine Öffnung (12) mit dem Ausgang (3) oder einer Steuerdruckquelle in Verbindung steht. Erfindungsgemäß mündet die Öffnung (12) in einem konzentrisch zur Membran angeordnetes Gasverteiler-Ringkanal (11) und ist derart angeordnet und ausgebildet, daß der Druckausgleich zwischen dem Gasverteiler-Ringkanal (11) und der Kammer (10) im wesentlichen gleichmäßig über den Umfang der Kammer (10) stattfindet. Vorzugsweise sind mehrere Öffnungen (12) vorgesehen, die als Kanäle ausgebildet sind, die mit Umfangsabstand sternförmig zueinander angeordnet sind.

## Beschreibung

Die Erfindung betrifft ein Gas-Druckregelgerät zur Regelung des Druckes in einer Gasleitung mit einem Gehäuse, das einen Eingang, einen Ausgang und ein dazwischen angeordnetes Stellorgan aufweist und mit einer Membran, die die Bewegung des Stellorganes bewirkt oder steuert und mindestens eine Kammer begrenzt, welche über mindestens eine Öffnung mit dem Ausgang oder einer Steuerdruckquelle in Verbindung steht.

Derartige Gasdruckregelgeräte sind aus der Praxis bekannt. Sie werden zur Regelung des Druckes in einer Gasleitung verwendet, die zu einer Gasverbrauchseinrichtung beispielsweise einem Industriebrenner führt. Das Gas-Druckregelgerät kann auch als Gleichdruck- oder als Verhältnisdruck-Regelgerät zur Gemischregelung von Brenngas und Luft ausgeführt sein. Die Luftleitung bildet in diesen Fällen die Steuerdruckquelle.

Die von der Membran begrenzte Kammer steht über eine Öffnung in Form einer Bohrung mit dem Ausgang oder einer Steuerdruckquelle in Verbindung. Insbesondere bei kleinem Querschnitt der Bohrung ist die Druckverteilung ungleichmäßig und es treten unerwünschte Druckschwingungen auf. Dadurch werden Meßfehler verursacht und die Regelgenauigkeit beeinträchtigt.

Aufgabe der Erfindung ist es demgemäß, ein Gas-Druckregelgerät der eingangs genannten Art derart zu verbessern, daß diese Nachteile vermieden, Meßfehler verringert sowie die Regelgenauigkeit erhöht werden.

Erfindungsgemäß wird diese Aufgabe dadurch gelöst, daß die Öffnung in einem konzentrisch zur Membran angeordneten Gasverteiler-Ringkanal mündet und derart angeordnet und ausgebildet ist, daß der Druckausgleich zwischen dem Gasverteiler-Ringkanal und der Kammer im wesentlichen gleichmäßig über den Umfang der Kammer stattfindet.

Durch diese Maßnahme ist die Druckverteilung gleichmäßig und Gasdruckschwingungen werden vermieden. Meßfehler werden verringert und die Regelgenauigkeit verbessert.

Eine bevorzugte Weiterbildung ist dadurch gekennzeichnet, daß mehrere Öffnungen vorgesehen sind, daß die Öffnungen als Kanäle ausgebildet sind, die mit Umfangsabstand sternförmig zueinander angeordnet sind. Vorzugsweise sind die Kanäle als Schlitze ausgebildet. Da die Schlitze wenig Bauhöhe beanspruchen, ist die Bauhöhe des Regelgerätes gering.

Eine weitere Ausgestaltung besteht darin, daß die Öffnung als Ringspalt ausgebildet ist.

Vorteilhafterweise ist die Kammer und die Öffnung bzw. die Öffnungen in einem Wandelement ausgebildet, welches austauschbar in das Gehäuse einsetzbar ist.

Eine wesentliche Weiterbildung besteht darin, daß die Membran zwischen dem Wandelement und einem tellerförmigen Bauteil gasdicht gehalten wird und daß das tellerförmige Bauteil austauschbar im Gehäuse angeordnet ist.

Vorzugsweise weist das Wandelement eine umlaufende Kante zur Halterung der Membran auf.

Die Herstellung der einzelnen Elemente des Gasdruckreglers ist einfach. Außerdem wird die Montage dadurch erleichtert, daß die einzelnen Bauelemente ohne Berücksichtigung bestimmter Winkelpositionen durch ein einfaches Zusammenschieben zu dem jeweils gewünschten Regler zusammengesetzt werden können.

Vorzugsweise ist der Gasverteiler-Ringkanal zwischen dem Gehäuse, dem Wandelement und dem tellerförmigen Bauteil ausgebildet, wobei zwischen dem Gehäuse und dem Wandelement bzw. dem tellerförmigen Bauteil Dichtmittel vorgesehen sind.

Bei einer bevorzugten Ausführungsform ist das Gas-Druckregelgerät nach der Erfindung dadurch gekennzeichnet, daß im Ausgang eine Querschnittsverengung angeordnet ist und daß als Istwert des Druckes im Ausgang der durch die Querschnittsverengung verminderte Druck abgegriffen wird. Die Regelgenauigkeit wird weiter erhöht, weil durch diese Maßnahme Druckverluste in der Gasleitung stromab der Abgriffstelle kompensiert werden können, und zwar in Abhängigkeit von der Durchflußmenge.

Das Flächenverhältnis vom verengten Querschnitt zum Ausgangsquerschnitt wird so eingestellt, daß bei einer vorgegebenen Durchflußmenge des Gas-Druckregelgerätes die Druckdifferenz über der Querschnittsverengung gleich dem Druckverlust zwischen dem Ausgang des Gasdruckreglers und dem Eingang der Gasverbrauchseinrichtung ist.

Der Druckverlust wird nicht nur in einem weiten Bereich des ausgangsseitigen Gasdruckes kompensiert, sondern auch in einem weiten mengenmäßigen Bereich.

Diese Ausführungsform ist bei Gleichdruck- oder Verhältnisdruckregelgeräten zur Gemischregelung von Brenngas und Luft bei Gasbrennern besonders vorteilhaft.

Vorteilhafterweise ist die Querschnittsverengung als Venturidüse ausgebildet. Diese Weiterbildung ermöglicht den Aufbau eines sehr kompakten Gerätes. Außerdem verursacht die Venturidüse nur einen minimalen Druckabfall. Vorteilhafterweise ist die Querschnittsverengung in Form einer Venturidüse als zylindrisches Bauteil ausgebildet, welches austauschbar in das Gehäuse und ein mit diesem verbundenes Anschlußteil einsetzbar ist.

Ferner schlägt die Erfindung vor, daß im Bereich der Querschnittsverengung mit Umfangsabstand sternförmig zueinander angeordnete Austrittskanäle vorgesehen sind, die zu einem ringförmigen Sammelkanal führen und daß der Sammelkanal mit dem Gasverteiler-Ringkanal über mindestens eine Bohrung im Gehäuse in Verbindung steht. Diese Weiterbildung bewirkt eine gleichmäßige Druckverteilung und eine Dämpfung der Wirbel des Gasstromes des zu vergleichenden Gasanteils.

Eine alternative Ausführungsform besteht darin, daß um den Ausgang ein spaltförmiger Kanal ausgebildet ist und daß der Kanal mit dem Gasverteiler-Ringkanal über mindestens eine Bohrung im Gehäuse in Verbindung steht.

Eine bevorzugte, fertigungstechnisch besonders einfache Ausführungsform besteht darin, daß das Gehäuse mit einem Anschlußelement verbunden ist, das eine Anschlußbohrung für den Ausgang aufweist, daß sich eine flache Dichtung zwischen dem Gehäuse und dem Anschlußelement befindet und daß der spaltförmige Kanal als Ausschnitt in der Dichtung gebildet wird.

Schließlich besteht eine vorteilhafte Ausgestaltung darin, daß die Kammer über eine Abflußdüse in dem Wandelement mit einer Arbeitsdruckkammer verbunden ist, daß der Durchfluß durch die Abflußdüse mittels eines Verschlußkörpers gesteuert wird, der von der unter dem Einfluß einer Kraft stehenden Membran getätigt wird, daß die Arbeitsdruckkammer über eine Drossel mit dem Eingang in Verbindung steht und daß die Arbeitsdruckkammer von einer Arbeitsmembran begrenzt wird, die das Stellglied betätigt.

Die auf die Membran einwirkende Kraft kann bei einem Druckregler eine Federkraft sein. Bei einem Gleichdruckregler wird die Kraft von einem Steuerluftdruck sowie einer Federkraft zur Nullpunktverschiebung gebildet. Bei einem Verhältnisdruckregler wird die Kraft von einer weiteren Membran mit einer anderen wirksamen Fläche als der ersten Membran erzeugt.

Die Erfindung wird im folgenden anhand von zwei bevorzugten Ausführungsformen des erfindungsgemäßen Gas-Druckregelgerätes in Zusammenhang mit der Zeichnung näher erläutert.

Die Zeichnung zeigt in
- Fig. 1: einen Längsschnitt durch ein Gas-Druckregelgerät;
- Fig. 2: einen Blick von unten gem. Pfeil A in Fig. 1 auf das Wandelement;
- Fig. 3: einen Längsschnitt durch eine zweite Ausführungsform eines Gas-Druckregelgerätes.

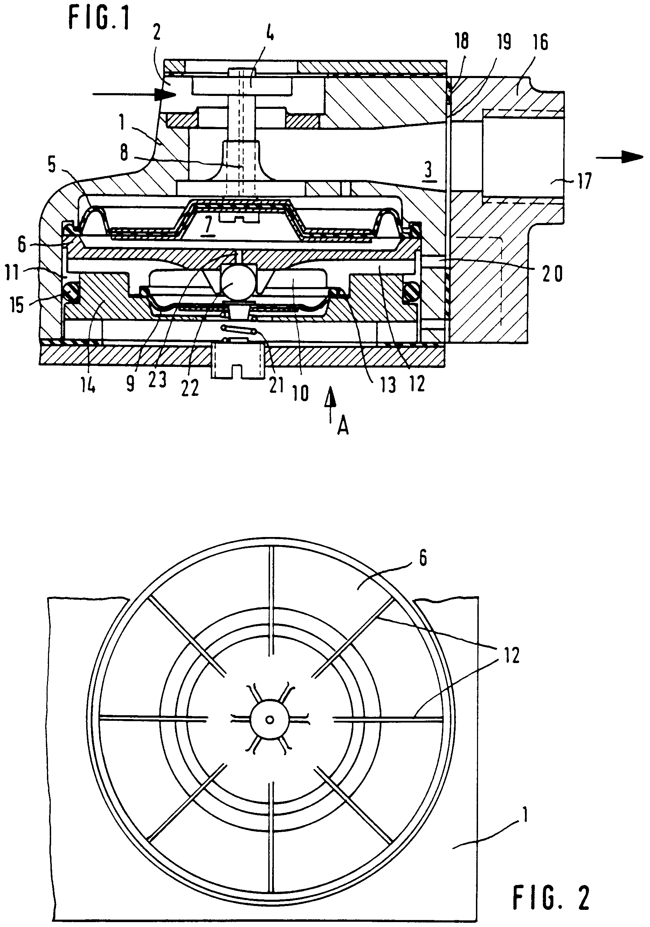

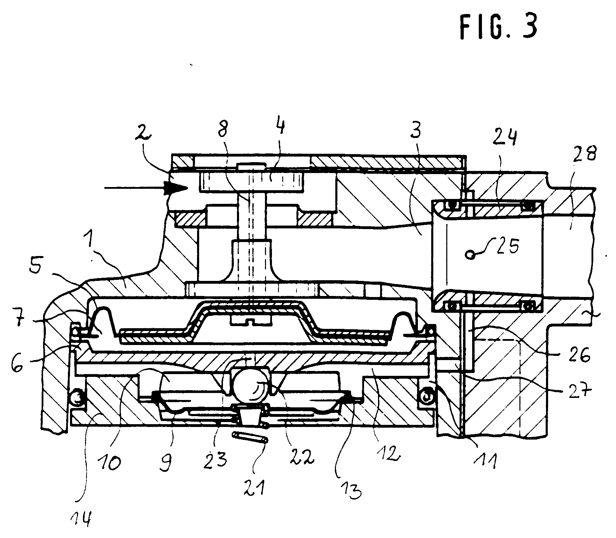

Das Gas-Druckregelgerät nach Fig. 1 und 3 umfaßt ein Gehäuse 1 mit einem Eingang 2, einem Ausgang 3 und einem dazwischen angeordneten Stellorgan 4. Das Stellorgan 4 wird von einer Arbeitsmembran 5 betätigt. Die Arbeitsmembran 5 bildet zusammen mit einem Wandelement 6 eine Arbeitsdruckkammer 7. Die Arbeitsdruckkammer 7 steht über eine Drossel 8 mit dem Eingang 2 in Verbindung.

Das Wandelement 6 bildet außerdem gemeinsam mit einer Servoreglermembran 9 eine Servoreglerkammer 10. Konzentrisch zur Servorreglermembran 9 und zur Servoreglerkammer 10 ist ein Gasverteiler-Ringkanal 11 ausgebildet. Zwischen dem Gasverteiler-Ringkanal 11 und der Servoreglerkammer 10 befinden sich schlitzförmige Kanäle 12, die, wie in Fig. 2 zu erkennen ist, mit Umfangsabstand sternförmig zueinander angeordnet sind.

Das Wandelement 6 weist eine umlaufende Kante 13 zur gasdichten Halterung der Servoreglermembran 9 in einem tellerförmigen Bauteil 14 auf.

Der Gasverteiler-Ringkanal 11 wird zwischen dem Gehäuse 1, dem Wandelement 6 und dem tellerförmigen Bauteil 14 ausgebildet. Die Gasdichtigkeit gewährleisten übliche Dichtmittel 15.

Bei der Ausführungsform nach Fig. 1 ist das Gehäuse ist mit einem Anschlußelement 16 verbunden, das eine Anschlußbohrung 17 für den Ausgang aufweist. Zwischen dem Gehäuse 1 und dem Anschlußelement befindet sich eine flache Dichtung 18. In der Dichtung 18 befindet sich ein Ausschnitt 19 in Form eines spaltförmigen Kanals. Der spaltförmige Kanal 19 ist über eine Bohrung 20 mit dem Gasverteiler-Ringkanal 11 verbunden.

Über die Kanäle 12 findet ein Druckausgleich zwischen dem Ausgang und der Servoreglerkammer 10 statt. Die Druckverteilung ist gleichmäßig und Gasdruckschwingungen werden vermieden. Dadurch werden Meßfehler verringert und die Regelgenauigkeit verbessert. An der Servoreglermembran 9 wird der Druck im Ausgang mit einem Solldruck verglichen, der durch eine Sollwertfeder 21 erzeugt wird. In Abhängigkeit von dem Vergleich betätigt die Sollwertfeder einen Verschlußkörper 22, der den Durchfluß durch eine Abflußdüse 23 in dem Wandelement 6 beeinflußt.

Die Herstellung der einzelnen Elemente des Gasdruckregelers ist einfach. Außerdem wird die Montage dadurch erleichtert, daß die einzelnen Bauelemente ohne Berücksichtigung bestimmter Winkelpositionen durch ein einfaches Zusammenschieben zu dem jeweils gewünschten Regler zusammengesetzt werden können.

Die Bauhöhe des Regelgerätes ist gering, weil die schlitzförmigen Kanäle wenig Bauhöhe beanspruchen.

Bei der Ausführungsform nach Fig. 3 ist im Ausgang 3 eine Querschnittsverengung 24 in Form einer Venturidüse angeordnet. Im engsten Querschnitt der Venturidüse sind im Umfangsabstand sternförmig zueinander angeordnete Austrittskanäle 25 angeordnet, die zu einem flachen ringförmigen Sammelkanal 26 führen. Die Austrittskanäle 25 bewirken eine gleichmäßige Druckverteilung. Der Sammelkanal 26 ist über eine Bohrung 27 mit dem Gasverteiler-Ringkanal 11 verbunden, so daß in der Servoreglerkammer 10 der durch die Strömung in der Venturidüse 24 verringerte Istwert des Druckes im Ausgang 3 herrscht.

Die Querschnittsverenung 24 in Form einer Venturidüse ist als zylindrisches Bauteil ausgebildet, welches austauschbar in das Gehäuse 1 und ein mit diesem verbundenes Anschlußteil 28 eingesetzt ist.

## Patentansprüche

1. Gas-Druckregelgerät zur Regelung des Druckes in einer Gasleitung mit einem Gehäuse (1), das einen Eingang (2), einen Ausgang (3) und ein dazwischen angeordnetes Stellorgan (4) aufweist und mit einer Membran (9), die die Bewegung des Stellorganes (4) bewirkt oder steuert und zumindest eine Kammer (10) begrenzt, welche über mindestens eine Öffnung (12) mit dem Ausgang (3) oder einer Steuerdruckquelle in Verbindung steht,
dadurch gekennzeichnet,
daß die Öffnung (12) in einem konzentrisch zur Membran (9) angeordneten Gasverteiler-Ringkanal (11) mündet und derart angeordnet und ausgebildet ist, daß der Druckausgleich zwischen dem Gasverteiler-Ringkanal (11) und der Kammer (10) im wesentlichen gleichmäßig über den Umfang der Kammer (10) stattfindet.

2. Gas-Druckregelgerät nach Anspruch 1,
dadurch gekennzeichnet,
daß mehrere Öffnungen (12) vorgesehen sind, daß die Öffnungen (12) als Kanäle ausgebildet sind, die im Umfangsabstand sternförmig zueinander angeordnet sind.

3. Gas-Druckregelgerät nach Anspruch 1 oder 2,
dadurch gekennzeichnet,
daß die Kanäle (12) als Schlitze ausgebildet sind.

4. Gas-Druckregelgerät nach einem der Ansprüche 1-3,
dadurch gekennzeichnet,
daß die Kammer (10) und die Öffnung (12) bzw. die Öffnungen in einem Wandelement (6) ausgebildet sind, welches austauschbar in das Gehäuse (1) einsetzbar ist.

5. Gas-Druckregelgerät nach einem der Ansprüche 1-4,
dadurch gekennzeichnet,
daß das Wandelement (6) eine umlaufende Kante (13) zur Halterung der Membran (9) in einem tellerförmigen Bauteil (14) aufweist.

6. Gas-Druckregelgerät nach einem der Ansprüche 1-5,
dadurch gekennzeichnet,
daß der Gasverteiler-Ringkanal (11) zwischen dem Gehäuse (1), dem Wandelement (6) und dem tellerförmigen Bauteil ausgebildet ist, wobei zwischen dem Gehäuse und dem Wandelement bzw. dem tellerförmigen Bauteil (14) Dichtmittel (15) vorgesehen sind.

7. Gas-Druckregelgerät nach einem der Ansprüche 1-6,
dadurch gekennzeichnet,
daß im Ausgang (3) eine Querschnittsverengung(24) angeordnet und daß als Istwert des Druckes im Ausgang (3) der durch die Querschnittsverengung (24) verminderte Druck abgegriffen wird.

8. Gas-Druckregelgerät nach Anspruch 7,
dadurch gekennzeichnet,
daß die Querschnittsverengung (24) als Venturidüse ausgebildet ist.

9. Gas-Druckregelgerät nach Anspruch 8,
dadurch gekennzeichnet,
daß die Querschnittsverengung (24) in Form einer Venturidüse als zylindrisches Bauteil ausgebildet ist, welches austauschbar in das Gehäuse (1) und ein mit diesem verbundenes Anschlußteil (28) einsetzbar ist.

10. Gas-Druckregelgerät nach einem der Ansprüche 7-9,
dadurch gekennzeichnet,
daß im Bereich der Querschnittsverengung (24) mit Umfangsabstand sternförmig zueinander angeordente Austrittskanäle (25) vorgesehen sind, die zu einem ringförmigen Sammelkanal (26) führen und daß der Sammelkanal (26) mit dem Gasverteiler-Ringkanal (11) über mindestens eine Bohrung (27) im Gehäuse in Verbindung steht.

11. Gas-Druckregelgerät nach einem der Ansprüche 1-8,
dadurch gekennzeichnet,
daß um den Ausgang ein spaltförmiger Kanal (19) ausgebildet ist und daß der Kanal (19) mit dem Gasverteiler-Ringkanal (11) über mindestens eine Bohrung (20) im Gehäuse (1) in Verbindung steht.

12. Gas-Druckregelgerät nach Anspruch 11,
dadurch gekennzeichnet,
daß das Gehäuse (1) mit einem Anschlußelement (16) verbunden ist, das eine Anschlußbohrung (17) im Bereich des Ausganges aufweist, daß eine flache Dichtung (18) zwischen dem Gehäuse (1) und dem Anschlußelement (16) angeordnet ist und daß der spaltförmige Kanal (19) als Ausschnitt in der Dichtung aufgebildet ist.

13. Gas-Druckregelgerät nach einem der Ansprüche 1-12,
dadurch gekennzeichnet,
daß die Kammer (10) über eine Abflußdüse (23) in dem Wandelement (6) mit einer Arbeitsdruckkammer (7) verbunden ist, die von einer Arbeitsmembran (5) begrenzt wird, daß der Durchfluß durch die Abflußdüse (23) mittels eines Verschlußkörpers (22) gesteuert wird, der von der unter dem Einfluß einer Kraft (21) stehenden Membran (9) betätigt wird und das die Arbeitsdruckkammer (7) über eine Drossel (8) mit dem Eingang in Verbindung steht.
